# EUROPEAN PATENT APPLICATION

(11) **EP 1 641 222 A1**
(43) Date of publication of application: **29.03.2006**
(21) Application number: 05255828.5
(22) Date of filing: 21.09.2005
(51) Int. Cl.: H04L 29/12, H04L 29/06

(54) **Method and apparatus assigning network addresses for network devices**

(30) Priority: 24.09.2004 KR 2004076906
(71) Applicant: Samsung Electronics Co., Ltd., Suwon-si, Gyeonggi-Do (KR)
(72) Inventor: Moon, Choon-Kyoung, Giheung-Yongin-si Gyeonggi-do (KR)
(74) Representative: Robinson, Ian Michael

(57) **Abstract**

An apparatus and method effectively using communication resources supporting seamless automatic roaming over a wire/wireless multi-network. In the method, network addresses can be assigned to network devices (11-14) which communicate to external devices (1-4) via different communications routes, the method including updating state information of the network devices (11-14), and collecting the network addresses assigned to the network devices (11-14) and reassigning the network addresses when the updated state information is different from previous state information. Accordingly, it is possible to effectively use available communication resources to support seamless automatic roaming of all network addresses.

## Description

Embodiments of the present invention relate to an apparatus and method allowing effective use of communication resources over a wire/wireless multi-network supporting seamless automatic roaming.

Rapid advancements in communication technologies have resulted in diverse types of communication networks being available. Recently developed communications networks include wire local area networks (LANs), wireless LANs, Bluetooth networks, and code division multiple access (CDMA) networks. Differences between these networks result from the actual developmental history of each network, communication distances used, qualities of communication, and communication expenses. Such networks may be wire/wireless multi-networks extending over a single area, not separate areas, for example.

A conventional communications node can include a plurality of network devices, supporting various communication wire/wireless multi-networks. However, the node may substantially use only the most appropriate one of the network devices, at a current position, and may not use the other network devices even if they are still available at the current position. That is, the node assigns an Internet Protocol (IP) address to only the selected network device.

Use of only one of network devices results in a waste of communication resources. For instance, when the node uses only a wire LAN, where both the wire LAN and a wireless LAN can operate, the wireless LAN, which is a communication resource, is abandoned and not utilized, i.e., such abandonment is inefficient.

The conventional communications node allows fast switching from one network device to another network device in order to support seamless, automatic roaming in the wire/wireless multi-network. However, even if fast switching is guaranteed, much time is required to set up a network device that has not been used for a while, thereby preventing seamless automatic roaming.

According to the present invention there is provided an apparatus and method as set forth in the appended claims. Preferred features of the invention will be apparent from the dependent claims, and the description which follows.

Embodiments of the present invention set forth an apparatus and method allowing effective use of available communication resources and supporting seamless, automatic roaming.

Embodiments of the present invention also set forth a medium including computer readable code to implement the method of the present invention.

Embodiments of the present invention include a method of assigning network addresses to network devices which communicate with external devices via different communications routes, the method including updating state information of the network devices, and collecting network addresses assigned to the network devices and reassigning the network addresses among the network devices when the updated state information is different from previous state information of the network devices.

Preferably, the collecting of the network addresses assigned to the network devices may include collecting network addresses assigned to network devices which do not operate, and reassigning the collected network addresses to operating network devices.

The collecting of the network addresses assigned to the network devices may include assigning at least two network addresses to at least one operating network device when a number of operating network devices is less than a total number of the network addresses.

The collecting of the network addresses assigned to the network devices may include first assigning network addresses, which have previously been assigned to correspond to previously operating network devices, to current corresponding operating network devices. The collecting of the network addresses assigned to the network devices may further include assigning network addresses of non-operating network devices to operating network devices according to predetermined priority after first assigning default network addresses to the operating network devices.

The updating of the state information of the network devices may include calling a command collecting state information of the network devices, at an application level, and the collecting of the network addresses assigned to the network devices may include assigning the network addresses to respective network devices by calling a command assigning network addresses to network devices, at the application level.

The network devices may include a wire local area network device to communicate via a wire local area network, a wireless local area network device to communicate via a wireless local area network, a Bluetooth device to communicate via a Bluetooth network, and a code division multiple access device to communicate via a code division multiple access network.

Also, embodiments of the present invention include an apparatus assigning network addresses to network devices which communicate with external devices via different communications routes, the apparatus including a network device driver interface to provide commands related to network device drivers which respectively drive the network devices at an application level, and a network address assignment unit to assign network addresses to respective network devices by calling an assigning command, assigning network addresses to network devices, from commands provided by the network device driver interface.

The apparatus may further include a state information updating unit to update state information of the network devices, wherein the network address allocation unit collects network addresses assigned to the network devices and reassigns the collected network addresses among the network devices when the state information updated by the state information updating unit is different from previous state information of the network devices.

The state information updating unit may update the state information of the network devices by calling a collecting command collecting state information of the network devices from the commands provided by the network device driver interface.

The network address assignment unit may collect network addresses assigned to non-operating network devices, and reassigns the collected network addresses to operating network devices. The network address assignment unit may assign at least two network addresses to at least one operating network device when a number of the operating network devices is less than a total number of the network addresses. In addition, the network address assignment unit may first assign network addresses, which have been previously assigned to correspond to previously operating network devices, to current corresponding operating network devices. The network address assignment unit may further assign the network addresses to the network devices according to a predetermined priority.

Further, embodiments of the present invention include a medium including computer readable code to implement a method of assigning network addresses to network devices, which communicate to external devices via different communications routes, wherein the method further includes updating state information of the network devices, and collecting network addresses assigned to the network devices and reassigning the collected network addresses among the network devices when the updated state information is different from previous state information of the network devices.

Further still, embodiments of the present invention include an apparatus assigning network addresses to network devices which communicate with external devices via different communications routes, the apparatus including a network address assignment means for assigning network addresses to network devices by calling an assigning command, at an application level, for assigning network addresses to network devices, and a state information updating means for reassigning network addresses among the network devices, when current state information of the network devices is different from previous state information of the network devices, using the assigning command. Here, the reassigning of network addresses may be based on predetermined priority among the network devices.

Additional aspects and/or advantages of the invention will be set forth in part in the description which follows and, in part, will be apparent from the description, or may be learned by practice of the invention.

These and/or other aspects and advantages of the invention will become apparent and more readily appreciated from the following description of the embodiments, taken in conjunction with the accompanying drawings of which:
Figure 1 illustrates a communications node, according to an embodiment of the present invention;
Figure 2 illustrates a communications environment with all network devices operating;
Figure 3 illustrates a state information table obtained in the communications environment of Figure 2;
Figure 4 illustrates a communications environment with a wire local area network (LAN) device not operating;
Figure 5 illustrates a state information table obtained in the communications environment of Figure 4 before reallocating network addresses;
Figure 6 illustrates a state information table after allocating network addresses in the communications environment of Figure 4;
Figure 7 illustrates a communications environment with the wire LAN device and now a wireless LAN device not operating;
Figure 8 illustrates a state information table obtained in the communications environment of Figure 7 before reallocating network addresses;
Figure 9 illustrates a state information table after allocating network addresses in the communications environment of Figure 7;
Figure 10 illustrates a communications environment with the wire LAN device now operating and the wireless LAN device not operating;
Figure 11 illustrates a state information table obtained in the communications environment of Figure 10 before reallocating network addresses;
Figure 12 illustrates a state information table after allocating network addresses in the communications environment of Figure 10; and
Figure 13 illustrates a flowchart for a method of assigning network addresses to network devices, according to an embodiment of the present invention.

Reference will now be made in detail to embodiments of the present invention, examples of which are illustrated in the accompanying drawings, wherein like reference numerals refer to the like elements throughout. Embodiments are described below to explain the present invention by referring to the figures.

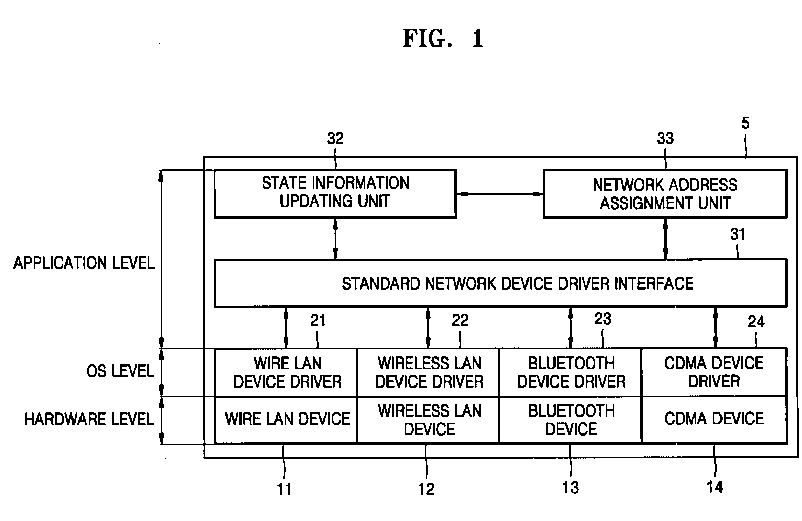

Figure 1 illustrates a communications node 5, according to an embodiment of the present invention. The communications node 5 may include network devices 11 through 14, network device drivers 21 through 24, a standard network device driver interface 31, a state information updating unit 32, and a network address assignment unit 33. The communication node 5 may be a mobile device, for example.

The network devices 11 through 14 may communicate with one another via different communication paths at a hardware level. In detail, a wire local area network (LAN) device 11 may communicate via a wire LAN, a wireless LAN device 12 may communicate via a wireless LAN, a Bluetooth device 13 may communicate via a Bluetooth network, and a code division multiple access (CDMA) device 14 may communicate via a CDMA network. Below, network devices will frequently be referenced to as the network devices 11 through 14, however, embodiments of the present invention are not limited thereto. For example, it would be apparent to those of ordinarily skill in the art that the communications node 5 may include network devices other than the network devices 11 through 14.

The network device drivers 21 through 24 respectively drive the network devices 11 through 14 at an operating system (OS) level. In detail, a wire LAN device driver 21 may drive the wire LAN device 11, a wireless LAN device driver 22 may drive the wireless LAN device 12, a Bluetooth device driver 23 may drive the Bluetooth device 13, and a CDMA device driver 24 may drive the CDMA device 14. In this embodiment, "OS level" may be equivalent with another term, e.g., "kernel level".

The standard network device driver interface 31 may provide functions related to the network devices 21 through 24 at an application level. In an embodiment, the functions may have a common format irrespective of the types of network devices. For instance, the functions may be "ifconfig" and "iwconfig," using Linux commands as an example, though embodiments of the present invention are not limted thereto. The standard network device driver interface 31 may be a type of Application Program Interface (API). In an embodiment, "application level" may be equivalent with another term, e.g., "user level".

The state information updating unit 32 can call a function in which information regarding the states, i.e., state information, of the network devices 11 through 14 can be collected, from functions provided by the standard network device driver interface 31, and accordingly, can update current state information of the network devices 11 through 14.

More specifically, the state information updating unit 32 can call the function for collecting the state information of the network devices 11 through 14 to obtain the state information, and can update the current state information of the network devices 11 through 14 with the received information.

For instance, the state information updating unit 32 may register a name of the wire LAN device 11 as "eth0" with the wire LAN device driver 21, and receive the state information of the wire LAN device 11 by calling the function "ifconfig" in the format "ifconfig eth0," for example.

The standard network device driver interface 31 may receive a message "RUNNING" in response to the calling of the function "ifconfig," while the wire LAN device 11 operates, and may not receive any message while the wire LAN device 11 does not operate.

Also, state information updating unit 32 may register a name of the wireless LAN device 12 as "eth1" with the wireless LAN device driver 22, and receive the state information of the wireless LAN device 12 by calling the function "iwconfig" in the format "iwconfig eth1," for example.

The state information updating unit 32 may also be informed of the intensity of a signal transmitted from an access point (AP) of a wireless LAN in response to the calling of the function "iwconfig," for example. The wireless LAN device 12 may be considered to be operating when the intensity of the signal is equal to or greater than a threshold, and considered not to be operating otherwise.

Similarly, the state information updating unit 32 can obtain the state information of the Bluetooth device 13 and the CDMA device 14. Specifically, the state information updating unit 32 may collect the state information of the network devices 11 through 14 by calling a function, for example, such as the above Linux commands "ifconfig" and "iwconfig", at the application level without requiring detailed information regarding the network devices 11 through 14. That is, the state information updating unit 32 may obtain the state information of the network devices 11 through 14 independently of the network devices 11 through 14.

When the state information, updated by the state information updating unit 32, indicates a change in the states of the network devices 11 through 14, the network address assignment unit 33 can call a function for assigning network addresses to the network devices 11 through 14, to collect the assigned network addresses, and reassign the network addresses to the network devices 11 through 14. In an embodiment, the network addresses are Internet Protocol (IP) addresses, which are typically the most frequently used network addresses.

Specifically, when the updated state information indicates a change in the states of the network devices 11 through 14, the network address assignment unit 33 collects network addresses assigned to the network devices 11 through 14 that do not operate, and reassigns the collected network addresses to the remaining network devices 11 through 14, which are operating, by calling a function for assigning network addresses to the network devices 11 through 14 which are operating.

In particular, the network address assignment unit 33 may assign the network addresses to the network devices 11 through 14 according to priority. If the number of network devices that are operating is less than the total number of the network addresses, at least two network addresses may be assigned to one high-priority network device that is operating, for example.

However, the network address assignment unit 33 may first assign network addresses, which would be assigned to corresponding network devices when all the network devices are operating, to their corresponding operating network devices. Below, network devices corresponding to network addresses will be referred to as default network devices. In other words, the network address assignment unit 33 may first assign the network addresses to their default network devices.

For instance, the network address assignment unit 33 may register the name "eth0" to the wire LAN device 11 with the wire LAN device driver 21, and assigns an IP address "168.219.202.169" to the wire LAN device 11 by calling the function "ifconfig" in the format "ifconfig eth0 168.219.202.169," for example.

In addition, the network address assignment unit 33 may actually assign two IP addresses "168.219.202.169" and "168.219.202.176" to the wire LAN device 11 by further calling the function "ifconfig" in the format "ifconfig eth0:1 168.219.202.176," for example.

Here, an nth IP addresses may be assigned to the wire LAN device 11 by calling the function "ifconfig" in the format "ifconfig eth0:n xxx.xxx.xxx.xxx".

Similarly, the network address assignment unit 33 can assign IP addresses to the wireless LAN device 12, the Bluetooth device 13, and the CDMA device 14. In other words, the network address assignment unit 33 can assign IP addresses to the network devices 11 through 14 by calling system functions, such as "ifconfig" or "iwconfig," at an application level without requiring detailed information regarding the network devices 11 through 14. That is, the network address assignment unit 33 can assign IP addresses to the network devices 11 through 14 independently of the network devices 11 through 14.

Such Linux commands of "ifconfig" and "iwconfig" are basic commands provided by a Linux operating system (OS), and can be called irrespective of the network devices 11 through 14, noting that corresponding commands could be utilized for alternate operating systems. The state information updating unit 32 and the network address assignment unit 33 may also be embodied as a shell script program which can combine such commands.

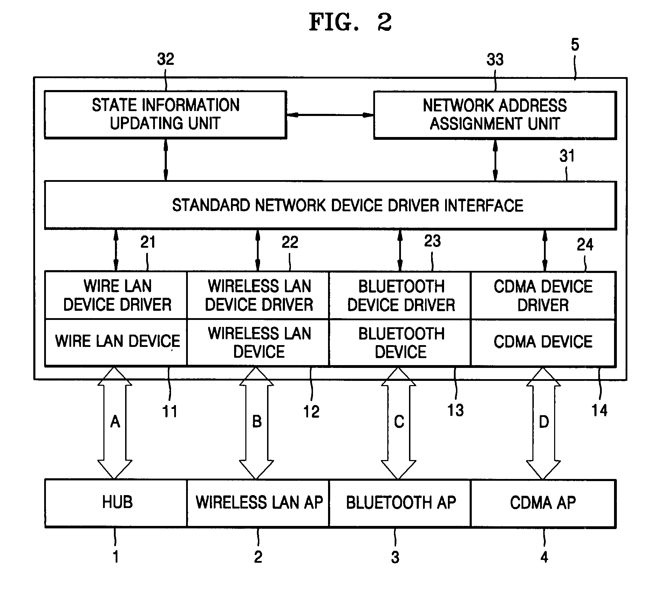

Figure 2 illustrates a communications environment in which all network devices 11 through 14 are operating. Referring to Figure 2, when all the wire LAN device 11, the wireless LAN device 12, the Bluetooth device 13, and the CDMA device 14 operate, the wire LAN device 11 can communicate with a hub 1, the wireless LAN device 12 can communicate with a wireless LAN AP, the Bluetooth device 13 can communicate with a Bluetooth AP, and the CDMA device 14 can communicate with a CDMA AP, for example.

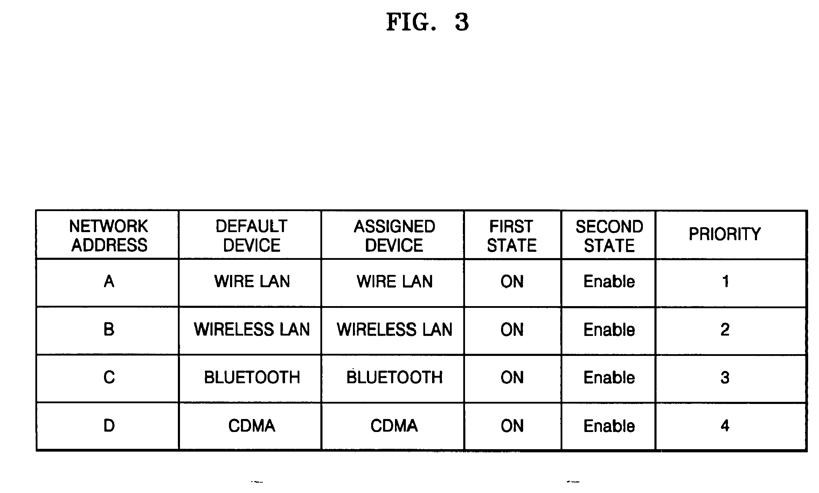

Figure 3 is a state information table obtained for the communications environment of Figure 2. Referring to Figure 3, the state information table can include a network address entry, a default device entry, an assigned device entry, a first state entry, a second state entry, and a priority entry. The state information updating unit 32 of Figure 1 may further update state information for the network devices 11 through 14 by updating the state information table.

In the network address entry, A, B, C, and D are recorded network addresses to be assigned to the network devices 11 through 14, respectively. In the default device entry, default network devices corresponding to the recorded network addresses are recorded. In the assigned device entry, network devices assigned to the recorded network addresses are recorded. In the first state entry, whether the network devices 11 through 14 are on or off is recorded, and in the second state entry, whether the network devices 11 through 14 are enabled or disabled by a user is recorded. In the illustrated priority entry, the priority of each of the network devices 11 through 14 can recorded. Alternate entries are available and embodiments of the present invention are not limited to the illustrated entries or entry categories.

The state information table of Figure 3 illustrates that all the network devices 11 through 14 are on and enabled. Accordingly, the network address assignment unit 33 can assign network addresses to the corresponding default network devices 11 through 14 according to the state information table.

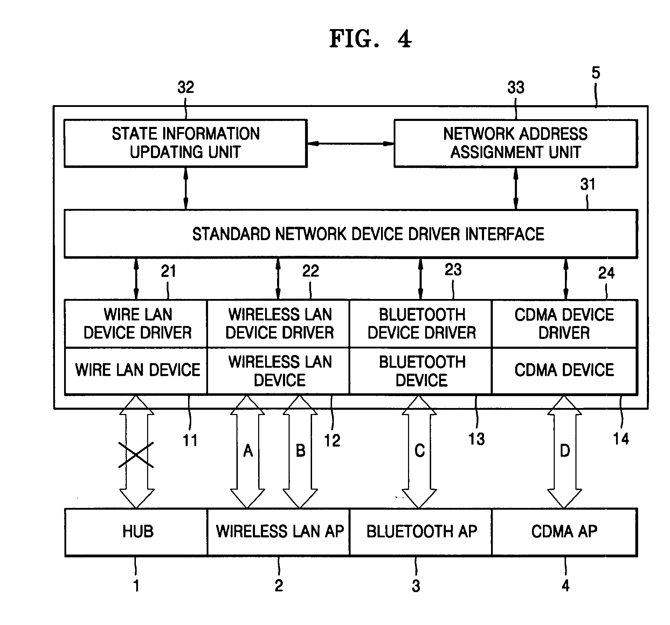

Figure 4 illustrates a communications environment where the wire LAN device 11 of Figure 1 has ceased to operate. Referring to Figure 4, the wire LAN device 11 does not operate, but the wireless LAN device 12, the Bluetooth device 13, and the CDMA device 14 do operate. Also, the wire LAN device 11 does not communicate with a hub 1, while the wireless LAN device 12 may communicate with a wireless LAN AP, the Bluetooth device 13 may communicate with a Bluetooth AP, and the CDMA device 14 may communicate with a CDMA AP.

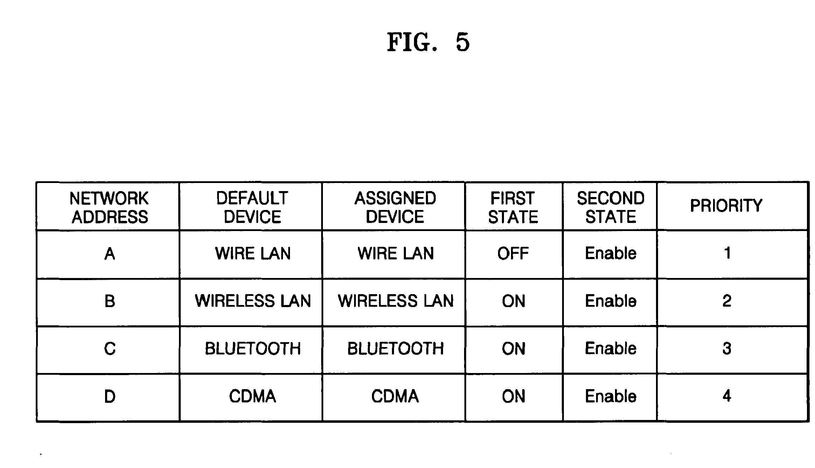

Figure 5 illustrates a state information table obtained in the communications environment of Figure 4, before reassignment of network addresses to compensate for the loss of the wire LAN device 11 communication. Here, the state information table of Figure 5 shows that the wire LAN device 11 is off and enabled, and the other network devices 12 through 14 are on and enabled.

Based on the state information table, the network address assignment unit 33 may first assign network addresses to the corresponding default network devices that are operating, and then, assign the remaining network addresses of the devices that are not operating to the operating network devices according to priority, for example. Referring to Figure 4, since the priority is given to the wireless LAN device 12 over the Bluetooth device 13, two network addresses, i.e., A and B, may be assigned to the wireless LAN device 12.

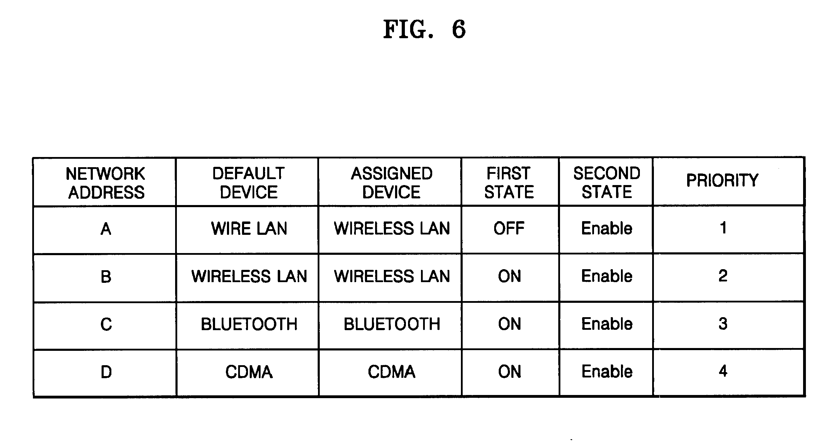

Accordingly, Figure 6 illustrates a state information table after assigning network addresses to operating network devices in the communications environment of Figure 4. The state information updating unit 32 can update the state information table to reflect the result of assigning the network addresses with the network address assignment unit 33. Referring to Figure 6, the state information updating unit 32 records the wireless LAN device 12 in the assigned device entry corresponding to the network address A.

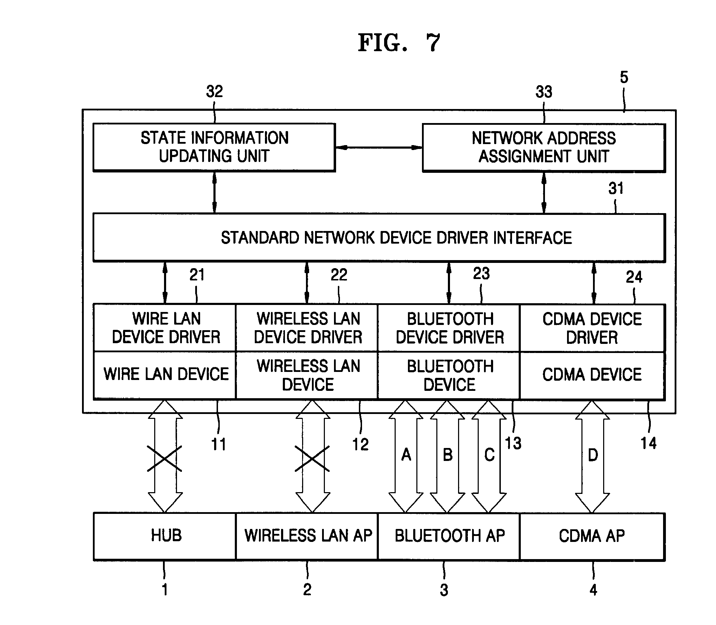

Figure 7 illustrates a communications environment where both the wire LAN device 11 and now the wireless LAN device 12 of Figure 1 do not operate. Referring to Figure 7, the wire LAN device 11 and the wireless LAN device 12 do not operate, but the Bluetooth device 13 and the CDMA device 14 operate. Also, the wire LAN device 11 does not communicate with a hub 1, the wireless LAN device 12 does not communicate with a wireless LAN AP 2, the Bluetooth device 13 may communicate with a Bluetooth AP 3, and the CDMA device 14 may communicate with a CDMA AP 4.

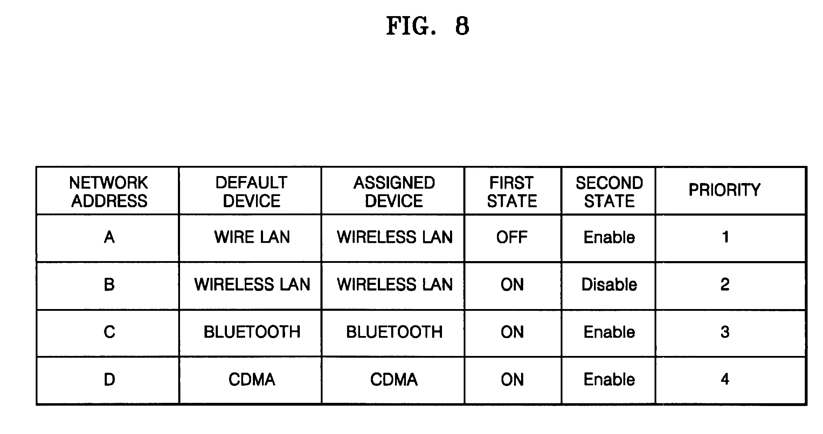

Figure 8 illustrates a state information table obtained in the communications environment of Figure 7, before reassignment of network addresses to compensate for the loss of the wire LAN device 11 and the wireless LAN device 12 communication. Here, the state information table of Figure 8 illustrates that the wire LAN device 11 is off and enabled, the wireless LAN device 12 is on and disabled, and the network devices 13 and 14 are on and enabled.

Thus, the network address assignment unit 33 may first assign network addresses to their default operating network devices according to the state information table, and then assigns the remaining network addresses of the devices that are not operating to the operating network devices according to priority. Referring to Figure 7, priority is given to the Bluetooth device 13 over the CDMA network device 14, and network addresses A, B, and C may, thus, be assigned to the Bluetooth device 13.

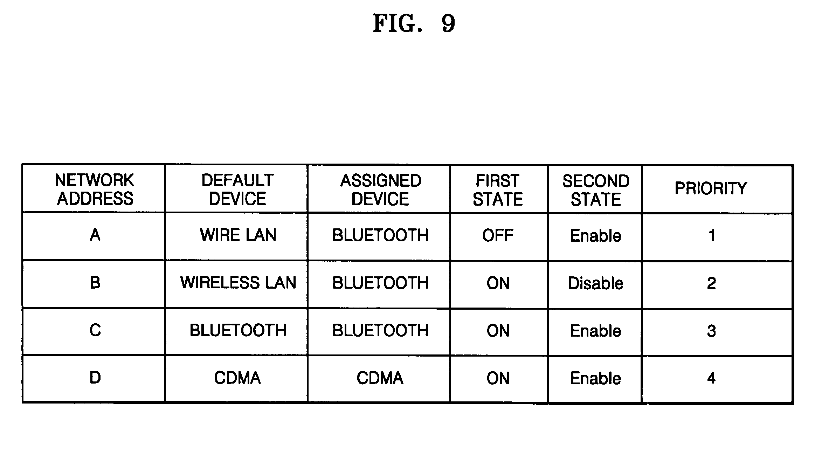

Accordingly, Figure 9 illustrates a state information table after assigning network addresses in the communications environment of Figure 7. Referring to Figure 9, the state information updating unit 32 may update the state information table to reflect the result of the assignment of network addresses to the network devices 13 and 14 with the network address assignment unit 33. That is, the state information updating unit 32 may record "Bluetooth" in an assigned device entry for the network addresses A, B, and C.

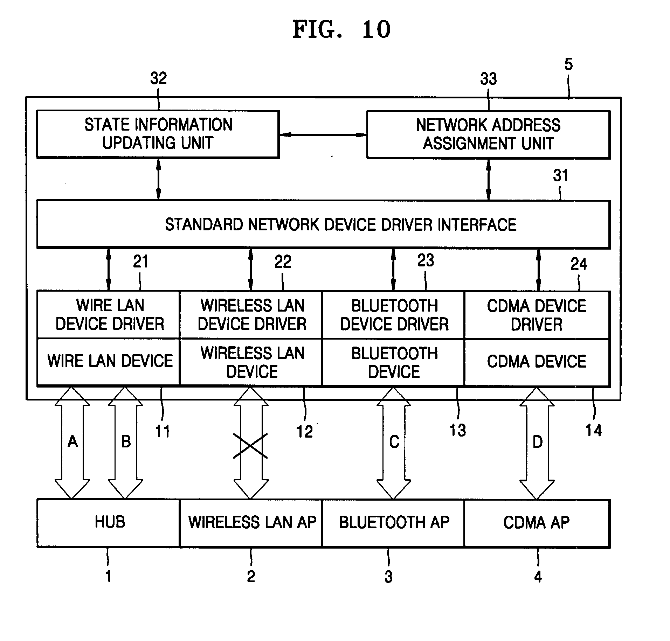

Figure 10 illustrates a communications environment where the wire LAN device 11 is now operating but wireless LAN device 12 of Figure 1 still does not operate. That is, the wireless LAN device 12 does not operate, while the wire LAN device 11, the Bluetooth device 13, and the CDMA device 14 do operate. The wire LAN device 11 may communicate with a hub 1, the wireless LAN device 12 does not communicate with a wireless LAN AP 2, the Bluetooth device 13 may communicate with a Bluetooth AP 3, and the CDMA device 14 may communicate with a CDMA AP 4.

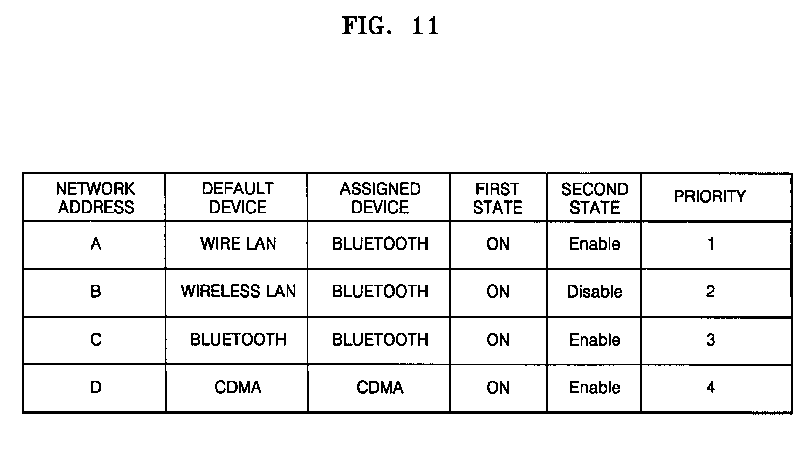

Figure 11 illustrates a state information table obtained in the communications environment of Figure 10, before reassignment of network addresses to accommodate the now operating status of the wire LAN device 11. Referring to the state information table of Figure 11, the wireless LAN device 12 is on and disabled, and the network devices 11, 13, and 14 are on and enabled.

Thus, the network address assignment unit 33 may first assign network addresses to their default operating network devices according to the state information table, and then the remaining network addresses of the network devices not operating may be assigned to the other network devices according to priority. Therefore, the network addresses A and B can now be given to the wire LAN device 11 which has the highest priority.

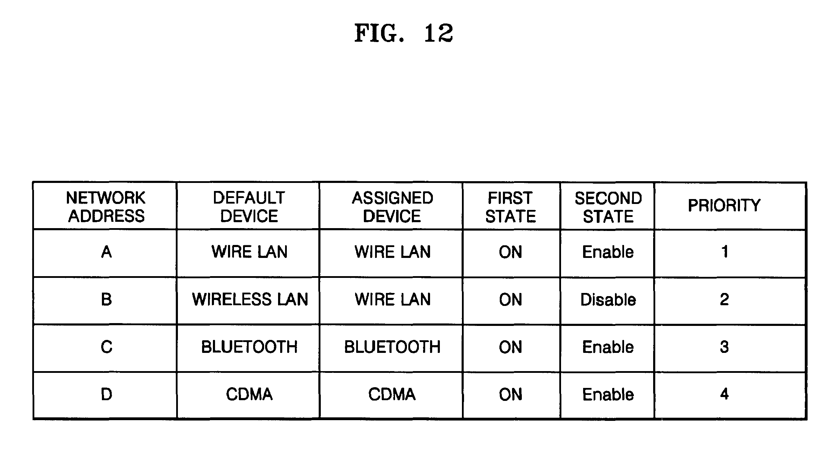

Accordingly, Figure 12 illustrates a state information table after assigning network addresses in the communications environment of Figure 10. Referring to Figure 12, the state information updating unit 32 can update the state information table to reflect the result of the assignment of the network addresses with the network address assignment unit 33. That is, the state information updating unit 32 may record "wire LAN" in assigned device entries for the network addresses A and B.

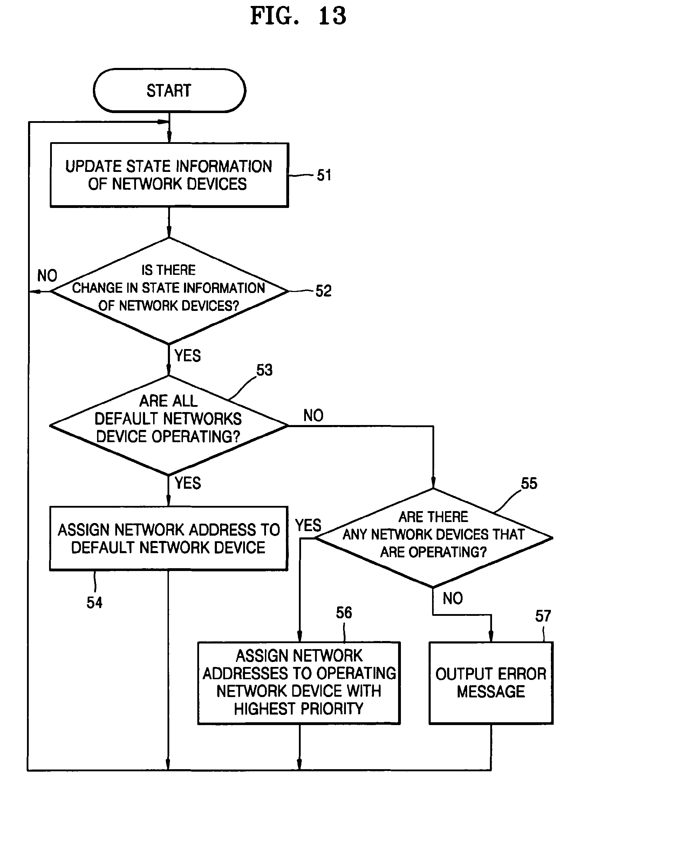

Figure 13 illustrates a flowchart for a method of assigning network addresses, according to an embodiment of the present invention. The method may be performed in the communications node 5 of Figure 1, for example. Thus, although not specifically described below with reference to Figure 13, the above description of the communications node 5 is also applicable in the method of Figure 13.

Referring to Figure 13, the state information updating unit 32 of the communications node 5 may update current state information of network devices by calling a function requesting state information of network devices from functions provided by the standard network device driver interface 31 (operation 51) . In other words, the state information updating unit 32 may update a state information table based on the state information provided in response to the calling of the function requesting the state information of the network devices.

Next, the network address assignment unit 33 may determine whether there has been a change in the updated state information (operation 52). That is, the network address assignment unit 33 may determine whether there has been a change in information recorded in first and second state entries of the state information table, for example. In an embodiment, the network addresses may be IP addresses.

If it is determined in operation 52 that the information recorded in the first and second state entries has changed, the network address assignment unit 33 may check the states of default network devices which correspond to the network addresses (operation 53). That is, the network address assignment unit 33 can determine whether there has been a change in information recorded in the first and second state entries of the network devices in the state information table.

If it is determined in operation 53 that all of the network devices are operating, the network address assignment unit 33 assigns the network addresses to their respective default network devices (operation 54). That is, when all of the network devices are on and enabled, the network address assignment unit 33 may assign the network addresses to the default network devices by calling a function assigning network addresses to the respective default network devices.

If it is determined in operation 53 that some of the network devices are not operating, the network address assignment unit 33 can determine which network devices are enabled (operation 55). In other words, when the default network devices are off or disabled, the network address assignment unit 33 detects the network devices that are still on and enabled.

If it is determined in operation 55 that operating network devices exist, the network address assignment unit 33 calls the function assigning network addresses to assign network addresses to an operating network device with the highest priority (operation 56). That is, the network address assigning unit 33 assigns the network addresses to the operating network device with the highest priority by calling the function that assigns the network address to the operating network device with the highest priority among the operating network devices 11 through 14.

If it is determined in operation 55 that other operating network devices do not exist, the network address assignment unit 33 can output an error message indicating that there are no operating network devices (operation 57).

Embodiments of the present invention can be embodied as computer readable code, e.g., code, instructions, and programs, that can be implemented by a computer, e.g., performed in a general digital computer using a medium, e.g., a computer readable recording medium. Also, data used in embodiments of the present invention may be recorded on a medium, e.g., a computer readable recording medium, using various tools and methods.

The medium may be any medium that stores/transmits the computer readable code, such as a magnetic storage medium, e.g., a ROM, a flash memory, and a hard disc; an optical recoding medium, e.g., a CD ROM and a DVD; or carrier wave that transmits data via the Internet.

According to embodiments of the present invention, when there is a change in information regarding states of network devices, it is possible to effectively use available communication resources by collecting assigned network addresses and reassigning the network addresses to operating network devices. Since all network addresses are assigned to operating network devices, it is possible to maintain connection to the network addresses when at least one network device operates, thereby guaranteeing seamless, automatic roaming of the network addresses.

In addition, embodiments of the present invention introduce a standard network device driver interface that provides functions related to network device drivers, thereby changing communication routes independently of network devices. Accordingly, it is possible to more rapidly change communications routes. Also, no additional setup process is required to change communications routes even if network devices are changed.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of assigning network addresses to network devices (11-14) which communicate with external devices (1-4) via different communications routes, the method comprising:
updating state information of the network devices (11-14); and
collecting network addresses assigned to the network devices (11-14) and reassigning the network addresses among the network devices (11-14) when the updated state information is different from previous state information of the network devices (11-14).

2. The method of claim 1, wherein the collecting of the network addresses assigned to the network devices (11-14) comprises collecting network addresses assigned to network devices (11-14) which do not operate, and reassigning the collected network addresses to operating network devices (11-14).

3. The method of claim 1 or 2, wherein the collecting of the network addresses assigned to the network devices (11-14) comprises assigning at least two network addresses to at least one operating network device when a number of operating network devices (11-14) is less than a total number of the network addresses.

4. The method of claim 1, 2 or 3, wherein the collecting of the network addresses assigned to the network devices (11-14) comprises first assigning network addresses, which have previously been assigned to correspond to previously operating network devices, to current corresponding operating network devices.

5. The method of claim 4, wherein the collecting of the network addresses assigned to the network devices (11-14) further comprises assigning network addresses of non-operating network devices to operating network devices according to predetermined priority after first assigning default network addresses to the operating network devices (11-14).

6. The method of any preceding claim, wherein the updating of the state information of the network devices (11-14) comprises calling a command collecting state information of the network devices (11-14), at an application level, and
the collecting of the network addresses assigned to the network devices (11-14) comprises assigning the network addresses to respective network devices (11-14) by calling a command assigning network addresses to network devices, at the application level.

7. The method of any preceding claim, wherein the network devices (11-14) comprise any two or more of:
a wire local area network device (11) to communicate via a wire local area network;
a wireless local area network device (12) to communicate via a wireless local area network;
a Bluetooth device (13) to communicate via a Bluetooth network; and
a code division multiple access device (14) to communicate via a code division multiple access network.

8. An apparatus assigning network addresses to network devices (11-14) which communicate with external devices (1-4) via different communications routes, the apparatus comprising:
a network device driver interface (31) to provide commands related to network device drivers (21-24) which respectively drive the network devices (11-14) at an application level; and
a network address assignment unit (33) to assign network addresses to respective network devices (11-14) by calling an assigning command, assigning network addresses to network devices (11-14), from commands provided by the network device driver interface (31).

9. The apparatus of claim 8, further comprising a state information updating unit (32) to update state information of the network devices (11-14),
wherein the network address assignment unit (33) collects network addresses assigned to the network devices (11-14) and reassigns the collected network addresses among the network devices (11-14) when the state information updated by the state information updating unit (32) is different from previous state information of the network devices (11-14).

10. The apparatus of claim 9, wherein the state information updating unit (32) updates the state information of the network devices (11-14) by calling a collecting command collecting state information of the network devices (11-14) from the commands provided by the network device driver interface (31).

11. The apparatus of claim 8, 9 or 11, wherein the network address assignment unit (33) collects network addresses assigned to non-operating network devices (11-14), and reassigns the collected network addresses to operating network devices (11-14).

12. The apparatus of any of claims 8 to 11, wherein the network address assignment unit (33) assigns at least two network addresses to at least one operating network device (11-14) when a number of the operating network devices (11-14) is less than a total number of the network addresses.

13. The apparatus of any of claims 8 to 12, wherein the network address assignment unit (33) first assigns network addresses, which have been previously assigned to correspond to previously operating network devices (11-14), to current corresponding operating network devices (11-14).

14. The apparatus of any of claims 8 to 13, wherein the network address assignment unit (33) assigns the network addresses to the network devices (11-14) according to a predetermined priority.

15. The apparatus of any of claims 8 to 14, wherein the network devices (11-14) comprise:
a wire local area network device (11) to communicate via a wire local area network;
a wireless local area network device (12) to communicate via a wireless local area network;
a Bluetooth device (13) to communicate via a Bluetooth network; and
a code division multiple access device (14) to communicate via a code division multiple access network.

16. A medium comprising computer readable code to implement a method of assigning network addresses to network devices (11-14), which communicate to external devices (1-4) via different communications routes, wherein the method further comprises:
updating state information of the network devices (11-14); and
collecting network addresses assigned to the network devices (11-14) and reassigning the collected network addresses among the network devices (11-14) when the updated state information is different from previous state information of the network devices (11-14).

17. An apparatus assigning network addresses to network devices (11-14) which communicate with external devices (1-4) via different communications routes, the apparatus comprising:
a network address assignment means (33) for assigning network addresses to network devices (11-14) by calling an assigning command, at an application level, for assigning network addresses to network devices (11-14); and
a state information updating means (32) for reassigning network addresses among the network devices (11-14), when current state information of the network devices (11-14) is different from previous state information of the network devices (11-14), using the assigning command.

18. The apparatus of claim 17, wherein the reassigning of network addresses is based on predetermined priority among the network devices (11-14).
